# EUROPÄISCHE PATENTSCHRIFT

(11) **EP 3 862 730 B1**
(45) Veröffentlichungstag und Bekanntmachung des Hinweises auf die Patenterteilung: **04.01.2023**
(21) Anmeldenummer: 21151468.2
(22) Anmeldetag: 14.01.2021
(51) Int. Cl.: G01G 19/04

(54) **VERFAHREN, VORRICHTUNG UND VERWENDUNG EINER VORRICHTUNG ZUR ERMITTLUNG EINES REFERENZGEWICHTS ZUR KALIBRIERUNG BZW. EICHUNG VON FAHRZEUGWAAGEN**
METHOD, DEVICE AND USE OF A DEVICE FOR DETERMINING A REFERENCE WEIGHT FOR CALIBRATION OF VEHICLE CARRIAGES OR CALIBRATION OF VEHICLE SCALES
PROCÉDÉ, DISPOSITIF ET UTILISATION D'UN DISPOSITIF PERMETTANT DE DÉTERMINER UN POIDS DE RÉFÉRENCE DESTINÉ À L'ÉTALONNAGE OU AU CALIBRAGE DES BALANCES DES APPAREILS DE PESAGE DU MATÉRIEL ROULANT

(30) Priorität: 16.01.2020 DE 102020100906
(43) Veröffentlichungstag der Anmeldung: 11.08.2021
(73) Patentinhaber: Schenck Process Europe GmbH, 64293 Darmstadt (DE)
(72) Erfinder: MUELLER, Ralph, 64289 Darmstadt (DE)

(56) Entgegenhaltungen:
- DE-A1- 19 925 891
- DE-A1- 19 925 892
- DE-A1-102004 030 742
- DE-C1- 10 115 490

## Beschreibung

Die Erfindung betrifft ein Verfahren zur Ermittlung eines Referenzgewichts zur Kalibrierung bzw. Eichung von Fahrzeugwaagen gemäß dem Oberbegriff des Patentspruchs 1, eine Vorrichtung zur Durchführung des Verfahrens gemäß dem Oberbegriff des Patentanspruchs 8 sowie die Verwendung einer solchen Vorrichtung gemäß dem Oberbegriff des Patentanspruchs 10.

Im Güterverkehr stellt sich regelmäßig die Aufgabe, mit Transportgut beladene Fahrzeuge wie Schienenfahrzeuge und Straßenfahrzeuge zu verwiegen, um das Transportgut mengenmäßig zu erfassen. Das kann durch Verwiegen eines kompletten Fahrzeugs wie zum Beispiel eines Waggons geschehen, der als Ganzes auf eine Fahrzeugwaage gefahren und verwogen wird, oder achs- oder drehgestellweise, wobei in einzelnen Wägevorgängen jeweils nur ein Teil des Fahrzeuggewichts erfasst und nachfolgend durch Summenbildung das Gesamtgewicht ermittelt wird.

Grundsätzlich wird unterschieden zwischen statischen Wägeverfahren, bei denen das Fahrzeug während der Wägung steht, und dynamischen Wägeverfahren, bei denen die Wägung während der Überfahrt eines Fahrzeugs über eine Messstrecke erfolgt. Die statische Wägung ermöglicht genauere Messergebnisse, bedingt aber durch die Notwendigkeit des Rangierens der Fahrzeuge einen größeren Aufwand.

Um sicher zu stellen, dass die Messergebnisse innerhalb zulässiger Toleranzen bleiben, setzen beide Wägeverfahren die Verwendung geeichter bzw. kalibrierter Fahrzeugwaagen voraus. Deren Eichung bzw. Kalibrierung erfolgt mit Hilfe eines Referenzgewichts, dessen Gewicht vorab auf einer geeichten hochgenauen Waage ermittelt worden ist. Nur wenn das Verwiegen des Referenzgewichts auf der Fahrzeugwaage zu einem Gewicht führt, das lediglich innerhalb zulässiger Toleranzen vom Referenzgewicht abweicht, kann die Fahrzeugwaage zur Wägung mit Transportgut beladener Fahrzeuge freigegeben werden. In diesem Zusammenhang ist es bekannt, Schienenfahrzeuge als Referenzgewicht einzusetzen, beispielsweise einen aus mehreren Waggons bestehenden Zugverband, dessen Gesamtgewicht dann dem Referenzgewicht entspricht.

Aufgrund der hohen Genauigkeit der Messergebnisse eignen sich für die Ermittlung eines Referenzgewichts insbesondere Plattformwaagen. Da bekannte Plattformwaagen in ihrer Länge an gängige Fahrzeugbauarten angepasst sind, ergeben sich regelmäßig Probleme beim Wägen von Fahrzeugen, die in ihrer Länge von der üblichen Bauart abweichen. Dies ist beispielsweise beim Verwiegen von im Zugverband kurzgekuppelter Waggons oder eines Zugverbands mit Jakobs-Drehgestellen der Fall, bei denen eine Einheit aus zwei oder mehr kurzgekuppelten Waggons aufgrund ihrer Gesamtlänge nicht mehr auf eine Plattformwaage passt. Für ein exaktes Verwiegen müssen daher die einzelnen Waggons entkuppelt werden oder es ist ein Ausweichen auf andere Wägevorrichtungen notwendig. Beides ist aufgrund des damit verbundenen Zeit- und Arbeitsaufwands nachteilig. Ein Umbau der Waage zur Anpassung an längere Fahrzeugbauarten erweist sich aufgrund damit verbundener Investitionen in vielen Fällen als unwirtschaftlich.

Die Dokumente DE 101 15 490 C1, DE 199 25 891 A1, DE 199 25 892 A1 und DE 102 00 403 0742 A1 offenbaren Verfahren zur Ermittlung eines Referenzgewichts zur Kalibrierung bzw. Eichung von Fahrzeugwaagen.

Vor diesem Hintergrund besteht die Aufgabe der Erfindung darin, ein Verfahren und eine Vorrichtung sowie deren Verwendung anzugeben, die ein Ermitteln des Referenzgewichts zur Kalibrierung bzw. Eichung von Fahrzeugwaagen auf einfache und wirtschaftliche Weise ermöglichen.

Diese Aufgabe wird durch ein Verfahren mit den Merkmalen des Patentanspruchs 1, durch eine Vorrichtung mit den Merkmalen des Patentanspruchs 8 sowie durch die Verwendung einer solchen Vorrichtung gemäß den Merkmalen des Patentanspruchs 10 gelöst. Vorteilhafte Ausführungsformen ergeben sich aus den Unteransprüchen.

Der Grundgedanke der Erfindung beruht auf der Erkenntnis, dass bei einer Ermittlung des Gesamtgewichts eines Fahrzeugs durch Summierung der mit Hilfe einer Anzahl von einmaligen Einzelwägungen gewonnener Teilgewichte die Genauigkeit des Gesamtgewichts nicht den erhöhten Anforderungen zur Ermittlung eines Referenzgewichts zur Kalibrierung bzw. Eichung von Fahrzeugwaagen genügt. Aus diesem Grund ist gemäß der Erfindung ein zweiter Wägedurchgang vorgesehen, bei dem ebenfalls das Gesamtgewicht durch achsoder drehgestellweises Verwiegen des Fahrzeugs und Summieren der dabei erhaltenen Wägeergebnisse ermittelt wird. Erfindungsgemäß wird dabei unter dem Begriff "Summieren" nicht allein die Addition der einzelnen Wägeergebnisse verstanden, sondern auch die Subtraktion einzelner Wägeergebnisse, sofern erforderlich. Die Erfindung beschränkt sich aber nicht auf eine einfache Wiederholung des ersten Wägedurchgangs, sondern kombiniert bei jedem Wägedurchgang die zusammen gleichzeitig zu verwiegenden Achsen bzw. Drehgestelle eines Fahrzeugs unterschiedlich. Jeder Wägedurchgang führt auf diese Weise zu einem auf den einzelnen Wägedurchgang bezogenen spezifischen Gesamtgewicht bzw. spezifischen Referenzgewicht, das zur Ermittlung des letztendlich gültigen Referenzgewichts beiträgt.

Die unterschiedlichen Kombinationen der in der unterschiedlichen Wägedurchgängen einzeln oder zusammen zu verwiegender Achsen oder Drehgestelle wird vorzugsweise mithilfe einer elektronischen Datenverarbeitungseinheit erfolgen, in der die notwendigen Informationen über das Fahrzeug hinterlegt sind.

Ein erster Vorteil der Erfindung besteht zunächst darin, dass Fahrzeuge beliebiger Länge und Kupplungsart unter gleichzeitiger Berücksichtigung wirtschaftlicher Aspekte als Referenzgewicht herangezogen werden können. Ein Auflösen des Fahrzeugverbands oder Ausweichen auf unter Umständen weit entfernte Wägevorrichtungen ist nicht mehr notwendig.

Die Überlegenheit der erfindungsgemäßen Vorgehensweise gegenüber dem Stand der Technik kommt aber auch in der großen Genauigkeit zum Ausdruck, mit der sich das Referenzgewicht ermitteln lässt. Zurückführen lässt sich dies unter anderem darauf, dass mit dem erfindungsgemäßen Verfahren sowohl Lageungenauigkeiten im Gleis als auch Reibungseinflüsse infolge ungünstige Lager- oder Federpositionen beim Fahrwerk des Fahrzeugs herausgemittelt werden.

In einer einfachen Ausführungsform der Erfindung wird beispielsweise im Zuge der Messwertauswertung aus allen in den einzelnen Wägedurchgängen ermittelten spezifischen Referenzgewichten ein Mittelwert gebildet, der dem letztendlich gültigen Referenzgewicht entspricht. Fehler, die bei den Einzelwägungen der unterschiedlichen Wägedurchgängen auftreten, werden auf diese Weise ebenfalls gemittelt.

Eine zur Erhöhung der Genauigkeit weiterentwickelte Ausführungsform der Erfindung sieht demgegenüber vor, durch einen Vergleich der einzelnen spezifischen Referenzgewichte untereinander deren Plausibilität zu prüfen. Bei entsprechender Abweichung von einem vorgegebenen Plausibilitätskriterium werden einzelne spezifische Referenzgewichte verworfen und fließen somit nicht in die Ermittlung des Referenzgewichts ein.

Beispielsweise kann ein einzelnes spezifisches Referenzgewicht in einem Einzelvergleich mit anderen spezifischen Referenzgewichten verglichen werden. Liegt die Abweichung außerhalb der vorgegebenen Toleranz, ist das spezifische Referenzgewicht für die Ermittlung des Referenzgewichts nicht gültig.

Ebenso ist es möglich, die Plausibilität eines einzelnen spezifischen Referenzgewichts zu prüfen, indem festgestellt wird, ob es innerhalb eines vorgegebenen Streubereichs liegt. Nur innerhalb des Streubereichs liegende spezifische Referenzgewichte werden zur Ermittlung des Referenzgewichts herangezogen.

Vorzugsweise wird das Fahrzeug zur Ermittlung eines Referenzgewichts statisch verwogen, da diese Vorgehensweise originär zu hohen Messgenauigkeiten führt. Hierzu geeignet sind sowohl Plattformwaagen als auch Gleiswaagen.

Zur Ermittlung des Referenzgewichts liegt ebenso ein dynamisches Verwiegen des Fahrzeugs im Rahmen der Erfindung, was den zeitlichen Aufwand bei der Durchführung der Wägedurchgänge enorm verkürzt. Die Genauigkeit dieses Verfahrens kann gesteigert werden, indem die Anzahl an Überfahrten des Fahrzeugs über eine in ein Gleis integrierte Messtrecke erhöht wird.

Das erfindungsgemäße Verfahren eignet sich insbesondere in Verbindung mit Fahrzeugen, die aus kurzgekuppelten Waggons oder Waggons mit Jakobs-Drehgestellen bestehen, da diese bauartbedingt in ihrer Länge von den gängigen Größen konventioneller Waggons abweichen und daher oftmals zu lang für vorhandene Waagen sind.

Die Erfindung wird nachstehend anhand unterschiedlicher in der Zeichnung dargestellter Ausführungsbeispiele näher erläutert, wobei weitere Merkmale und Vorteile der Erfindung offenbar werden. Um den Grundgedanken der Erfindung besser zum Ausdruck bringen zu können, zeigen die Ausführungsbeispiele vereinfachte Umsetzungen der Erfindung mit Fahrzeugen bestehend aus zwei oder drei Waggons. In der Praxis ist vor allem bei Schienenfahrzeugen zur Bildung eines Referenzgewichts von Fahrzeugverbänden mit deutlich mehr Waggons auszugehen, beispielsweise mit zehn Waggons und mehr. Die Erfindung ist aber auch anwendbar, wenn Straßenfahrzeuge zur Ermittlung eines Referenzgewichts herangezogen werden. Die Ausführungsbeispiele sind daher nicht einschränkend zu verstehen.

Soweit es das Verständnis erleichtert, werden für gleiche und funktionsgleiche Merkmale der unterschiedlichen Ausführungsbeispiele gleichlautende Bezugszeichen verwendet.

In jeweils schematischer Darstellung zeigen die
- Fig. 1a: die Anordnung eines ein Referenzgewicht bildenden Fahrzeugs auf einer Waage zu unterschiedlichen Zeitpunkten während eines ersten Wägedurchgangs gemäß einem ersten Ausführungsbeispiel der Erfindung,
- Fig. 1b: die Anordnung des in Fig. 1a dargestellten Fahrzeugs auf der Waage zu unterschiedlichen Zeitpunkten während eines zweiten Wägedurchgangs,
- Fig. 2a: die Anordnung eines ein Referenzgewicht bildenden Fahrzeugs auf einer Waage zu unterschiedlichen Zeitpunkten während eines ersten Wägedurchgangs gemäß einem zweiten Ausführungsbeispiel der Erfindung,
- Fig. 2b: die Anordnung des in Fig. 2a dargestellten Fahrzeugs auf der Waage zu unterschiedlichen Zeitpunkten während eines zweiten Wägedurchgangs,
- Fig. 2c: die Anordnung des in den Fig. 2a und 2b dargestellten Fahrzeugs auf der Waage zu unterschiedlichen Zeitpunkten während eines dritten Wägedurchgangs,
- Fig. 2d: die Anordnung des in den Fig. 2a, 2b und 2c dargestellten Fahrzeugs auf der Waage zu unterschiedlichen Zeitpunkten während eines vierten Wägedurchgangs,
- Fig. 3a: die Anordnung eines ein Referenzgewicht bildenden Fahrzeugs auf einer Waage zu unterschiedlichen Zeitpunkten während eines ersten Wägedurchgangs gemäß einem dritten Ausführungsbeispiel der Erfindung, und
- Fig. 3b: die Anordnung des in Fig. 3a dargestellten Fahrzeugs auf der Waage zu unterschiedlichen Zeitpunkten während eines zweiten Wägedurchgangs.

In allen Figuren ist durchgängig mit dem Bezugszeichen 1 ein Gleis bezeichnet, auf dem sich ein aus mehreren Waggons 2, 3, 4 zusammengesetztes schienengebundenes Fahrzeug 5 befindet. Dessen Gesamtgewicht dient als Referenzgewicht zur Kalibrierung bzw. Eichung einer nicht weiter dargestellten Fahrzeugwaage. Der mittlere Längsabschnitt des Gleises 1 ist als hochgenaue Waage 6 ausgebildet, beispielsweise als Plattformwaage oder Gleiswaage, mit der das Gesamtgewicht des Fahrzeugs 5 ermittelt wird.

Da das Fahrzeug 5 in Richtung des Gleises 1 länger ist als die Waage 6, kann das Fahrzeug 5 nicht in einem einzigen Wägevorgang verwogen werden. Stattdessen sind mehrere Einzelwägungen notwendig, deren summierte Messergebnisse das Gesamtgewicht des Fahrzeugs 5 ergeben. Zu diesem Zweck umfasst eine erfindungsgemäße Vorrichtung eine elektronische Datenverarbeitungseinheit 7, an die die Messergebnisse der Einzelwägungen zur weiteren Verarbeitung geleitet werden. Neben der Entgegennahme der Messergebnisse und Summenbildung kann die Datenverarbeitungseinheit 7 auch Plausibilitätsabfragen durchführen, um gültige Messergebnisse von nicht gültigen Messergebnissen zu trennen. Beispielsweise kann die Datenverarbeitungseinheit 7 prüfen, ob die Differenz zweier Messergebnisse innerhalb vorgegebener Toleranzen liegt oder ob sich ein einzelnes Messergebnis noch innerhalb eines zulässigen Streubereichs befindet.

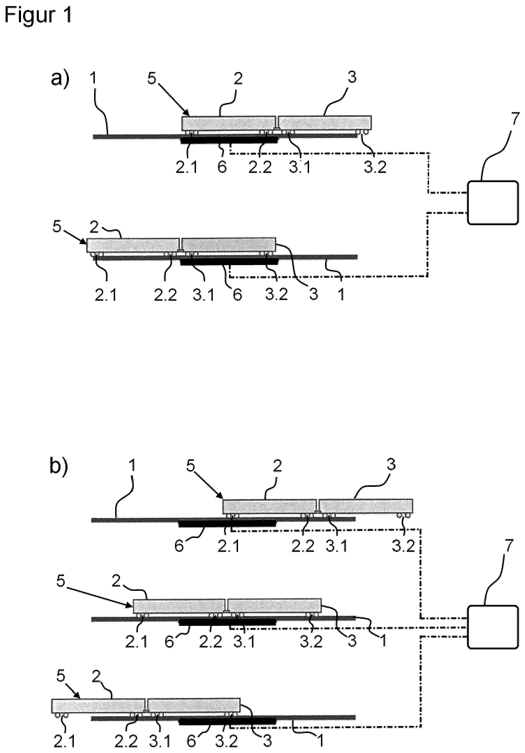

Die Fig. 1a und 1b zeigen eine erste Ausführungsform der Erfindung, bei der das Fahrzeug 5 einen ersten Waggon 2 und einen zweiten Waggon 3 umfasst, die miteinander kurzgekuppelt sind und daher bei der Wägung eine Einheit bilden. Die Waggons 2, 3 weisen an ihren gegenüberliegenden Endbereichen jeweils ein Drehgestell 2.1, 2.2 bzw. 3.1, 3.2 mit jeweils zwei Achsen und vier Rädern auf, mit denen die Waggongs 2, 3 ihr Gewicht auf das Gleis 1 bzw. die Waage 6 übertragen.

Fig. 1a gibt die unterschiedlichen Positionen des Fahrzeugs 5 auf dem Gleis 1 relativ zur Waage 6 während eines ersten Wägedurchgangs wieder. Der erste Wägedurchgang setzt sich aus zwei Einzelwägungen zusammen, wobei bei der ersten Einzelwägung (obere Darstellung) der erste Waggon 2 mit seinen beiden Drehgestellen 2.1, 2.2 auf der Waage 6 steht und der zweite Waggon 3 mit seinem beiden Drehgestellen 3.1, 3.2 auf dem Gleis 1 neben der Waage 6. Für die zweite Einzelwägung (untere Darstellung) wird das Fahrzeug 5 um eine Waggonlänge auf dem Gleis 1 rangiert, bis allein der zweite Waggon 3 mit seinen beiden Drehgestellen 3.1, 3.2 auf der Waage 6 steht.

Beim ersten Wägedurchgang besteht die Kombination der in den Einzelwägungen zusammen verwogenen Drehgestelle aus den beiden benachbarten Drehgestelle 2.1, 2.2 des ersten Waggons 2 (erste Einzelwägung) und den beiden benachbarten Drehgestelle 3.1, 3.2 des zweiten Waggons 3 (zweite Einzelwägung).

Durch Summieren der beiden Wägeergebnisse der beiden Einzelwägungen erhält man ein auf den ersten Wägedurchgang bezogenes erstes spezifisches Gesamtgewicht des Fahrzeugs 5 und damit ein erstes spezifisches Referenzgewicht.

Aus Fig. 1b gehen die unterschiedlichen Positionen des Fahrzeugs 5 auf dem Gleis 1 relativ zur Waage 6 während eines zweiten Wägedurchgangs hervor, wobei der zweite Wägedurchgang drei Einzelwägungen umfasst. Bei der ersten Einzelwägung (obere Darstellung) steht der Waggon 2 lediglich mit seinem ersten Drehgestell 2.1 auf der Waage 6, für die zweite Einzelwägung (mittlere Darstellung) wird das Fahrzeug 3 um eine halbe Waggonlänge nachgestellt, so dass der erste Waggon 2 lediglich mit seinem zweiten Drehgestell 2.2 und der zweite Waggon 3 lediglich mit dem dazu benachbarten ersten Drehgestell 3.1 auf der Waage 6 steht. Für die dritte Einzelwägung (untere Darstellung) wird das Fahrzeug 5 weiter um eine halbe Waggonlänge auf dem Gleis 1 rangiert, bis allein der zweite Waggon 3 mit seinem zweiten Drehgestell 3.2 auf der Waage 6 steht und verwogen wird.

Im zweiten Wägedurchgang wird die Kombination der in den Einzelwägungen einzeln oder zusammen verwogenen Drehgestelle demnach gebildet von dem ersten Drehgestell 2.1 des ersten Waggons 2 (erste Einzelwägung), von den benachbarten Drehgestellen 2.2 und 3.1 der beiden Waggons 2, 3 (zweite Einzelwägung) und von dem zweiten Drehgestell 3.2 des zweiten Waggons 3.

Das auf den zweiten Wägedurchgang bezogene zweite spezifische Referenzgewicht wird wiederum durch Summenbildung der bei den drei Einzelwägungen erhaltenen Wägeergebnisse ermittelt.

Anschließend kann aus den beiden spezifischen Referenzgewichten ein Mittelwert gebildet werden, der dann als Referenzgewicht für die Kalibrierung bzw. Eichung der nicht dargestellten Fahrzeugwaage verwendet wird.

Erfindungswesentlich ist, dass die für den ersten Wägedurchgang ausgewählte Kombination der bei den Einzelwägungen einzeln oder zusammen zu verwiegenden Drehgestellen sich von der für den zweiten Wägedurchgang ausgewählten Kombination unterscheidet.

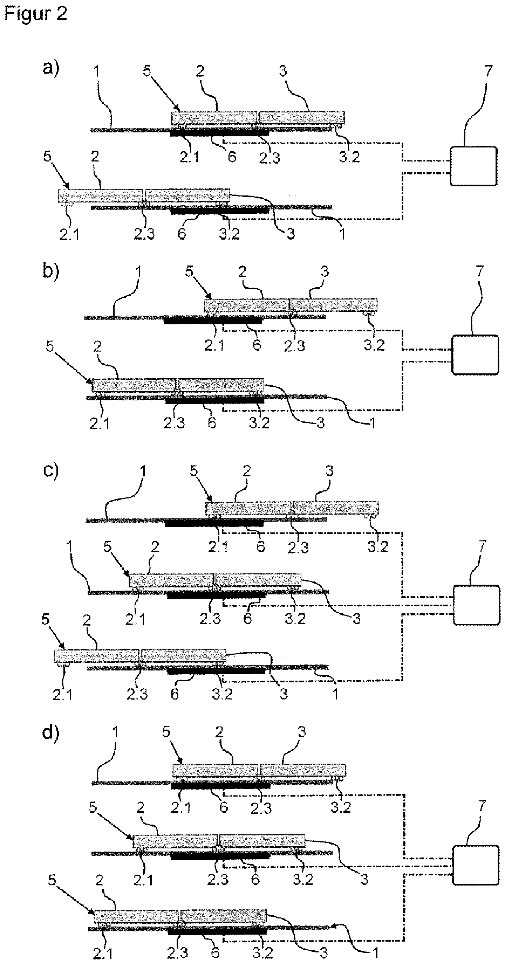

In der Praxis wird man sich bei der erfindungsgemäßen Ermittlung des Referenzgewichts in der Regel auf zwei Wägedurchgänge beschränken. Mitunter kann es aber Umstände geben, bei denen drei oder mehr Wägedurchgänge vorteilhaft sind. Ein solches Ausführungsbeispiel ist Gegenstand der Fig. 2a, 2b, 2c und 2d, das ansonsten weitgehend mit dem vorerwähnten Ausführungsbeispiel übereinstimmt, so dass dortige Ausführungen entsprechend gelten.

Das Fahrzeug 5 umfasst ebenfalls einen ersten Waggon 2 und einen damit kurzgekuppelten zweiten Waggon 3, die allerdings im Gegensatz zur vorerwähnten Ausführungsform im Kupplungsbereich ein gemeinsames Drehgestell 2.3 besitzen. Sowohl der erste Waggon 2 als auch der zweite Waggon 3 stützen sich mit ihren einander zugewandten Enden auf dem Drehgestell 2.3 ab, das die anteiligen Lasten wiederum in das Gleis 1 einleitet. Derartige Drehgestelle werden auch als Jakobs-Drehgestell bezeichnet.

Fig. 2a zeigt wiederum den ersten Wägedurchgang mit der relativen Position des Fahrzeugs 5 gegenüber der Waage 6 während der ersten Einzelwägung (obere Darstellung) und zweiten Einzelwägung (untere Darstellung). Man sieht, dass bei der ersten Einzelwägung das Drehgestell 2.1 des ersten Waggons 2 und das gemeinsame Drehgestell 2.3 der beiden Waggons 2 und 3 auf der Waage 6 stehen, während bei der zweiten Einzelwägung lediglich das zweite Drehgestell 3.2 des zweiten Waggons 3 verwogen wird.

Die Kombination der bei dem ersten Wägedurchgang in den Einzelwägungen einzeln oder zusammen verwogenen Drehgestelle besteht aus den beiden Drehgestellen 2.2 und 2.3 (erste Einzelwägung) und dem Drehgestell 3.2 (zweite Einzelwägung).

Die Summe der Wägeergebnisse aus den beiden Einzelwägungen ergibt das auf den ersten Wägedurchgang bezogene erste spezifische Referenzgewicht.

Bei dem in Fig. 2b dargestellten zweiten Wägedurchgang ist das Fahrzeug 5 derart auf dem Gleis 1 positioniert, dass bei der ersten Einzelwägung (obere Darstellung) allein das erste Drehgestell 2.1 des ersten Waggons 2 auf der Waage 6 steht und im Zuge der zweiten Einzelwägung (untere Darstellung) das gemeinsame Drehgestell 2.3 der beiden Waggons 2 und 3 zusammen mit dem benachbarten zweiten Drehgestell 3.2 des zweiten Wagons 2.

Es ergibt sich somit eine Kombination der bei dem zweiten Wägedurchgang in den Einzelwägungen einzeln oder zusammen verwogenen Drehgestelle bestehend aus dem Drehgestell 2.1 des ersten Waggons 2 (erste Einzelwägung) und den beiden Drehgestellen 2.3 und 3.2 (zweite Einzelwägung).

Durch Summieren der beiden Wägergebnisse wird das auf den zweiten Wägdurchgang bezogene zweite spezifische Referenzgewicht ermittelt.

Der dritte Wägedurchgang gemäß Fig. 2c umfasst drei Einzelwägungen, wobei in der ersten Einzelwägung (obere Darstellung) allein das erste Drehgestell 2.1 des ersten Waggons 2 verwogen wird, in der zweiten Einzelwägung (mittlere Darstellung) allein das gemeinsame Drehgestell 2.3 der beiden Waggons 2 und 3 und in der dritten Einzelwägung (untere Darstellung) allein das zweite Drehgestell 3.2 des zweiten Waggons 3.

Im dritten Wägedurchgang wird die Kombination der in den Einzelwägungen einzeln oder zusammen verwogenen Drehgestelle demnach gebildet von dem ersten Drehgestell 2.1 des ersten Waggons 2 (erste Einzelwägung), von dem gemeinsamen Drehgestell 2.3 der beiden Waggons 2 und 3 (zweite Einzelwägung) und von dem zweiten Drehgestell 3.2 des zweiten Waggons 3 (dritte Einzelwägung).

Die Summe der Wägergebnisse aus den drei Einzelwägungen ergibt das auf den dritten Wägedurchgang bezogene dritte spezifische Referenzgewicht.

Der vierte Wägedurchgang setzt sich wie in Fig. 2d dargestellt ebenfalls aus drei Einzelwägungen zusammen, wobei sich bei der ersten Einzelwägung (obere Darstellung) das erste Drehgestell 2.1 des ersten Waggons 2 und das gemeinsame Drehgestell 2.3 der beiden Waggons 2 und 3 zum Verwiegen auf der Waage 6 befinden. Nach Rangieren um eine halbe Waggonlänge wird in der zweiten Einzelwägung (mittlere Darstellung) allein das gemeinsame Drehgestell 2.3 der beiden Waggons 2 und 3 auf der Waage 6 verwogen und in der dritten Einzelwägung (untere Darstellung) schließlich das gemeinsame Drehgestell 2.3 der beiden Waggons 2 und 3 zusammen mit dem zweiten Drehgestell 3.2 des zweiten Waggons 3.

Für den vierten Wägedurchgang besteht demnach die Kombination der in den Einzelwägungen gleichzeitig verwogenen Drehgestelle aus dem ersten Drehgestell 2.1 des ersten Waggons 2 und dem gemeinsamen Drehgestell 2.3 der beiden Waggons 2 und 3 (erste Einzelwägung), aus dem gemeinsamen Drehgestell 2.3 der beiden Waggons 2 und 3 (zweite Einzelwägung) und aus dem gemeinsamen Drehgestell 2.3 der beiden Waggons 2 und 3 und dem zweiten Drehgestell 3.2 des zweiten Waggons 3 (dritte Einzelwägung).

Zur Ermittlung des auf den vierten Wägedurchgang bezogenen vierten spezifischen Referenzgewichts werden die Wägergebnisse der ersten und dritten Einzelwägung summiert. Da dabei der über das Drehgestell 2.3 in die Waage 6 eingetragene Gewichtsanteil zweimal erfasst wird, wird das Messergebnis der zweiten Einzelwägung von der Summe subtrahiert.

Erfindungswesentlich ist auch hier, dass sich alle für die vier Wägedurchgänge ausgewählten Kombinationen der bei den Einzelwägungen einzeln oder zusammen zu verwiegenden Drehgestellen voneinander unterscheiden.

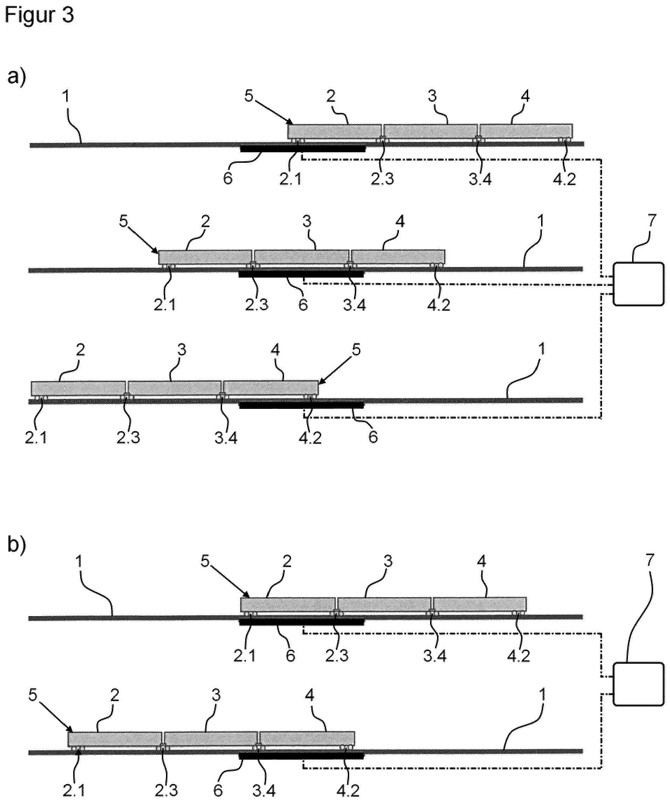

Die erfindungsgemäße Ausführungsform nach den Fig. 3a und 3b betrifft ein Fahrzeug 5, das aus den drei kurzgekuppelten Waggons 2, 3, 4 zusammengesetzt ist, dessen Gesamtgewicht das Referenzgewicht bildet. Im Verbindungsbereich zwischen dem ersten Waggon 2 und dem zweiten Waggon 3 ruht das Fahrzeug auf einem ersten Jakobs-Drehgestell 2.3 und im Verbindungsbereich zwischen dem zweiten Waggon 3 und dritten Waggon 4 auf einem zweiten Jakobs-Drehgestell 3.4, während an den Enden des Fahrzeugs 5 die Waggons 2 und 4 die Drehgestelle 2.1 und 4.2 aufweisen.

Der erste Wägedurchgang wie in Fig. 3a dargestellt umfasst drei Einzelwägungen mit der alleinigen Wägung des Drehgestells 2.1 des ersten Waggons 2 auf der Waage 6 im Zuge der ersten Einzelwägung (obere Darstellung), der Wägung der beiden benachbarten Jakobs-Drehgestellen 2.3 und 3.4 zwischen erstem Waggon 2 und zweitem Waggon 3 bzw. zweitem Waggon 3 und drittem Waggon 4 im Zuge der zweiten Einzelwägung (mittlere Darstellung) sowie der Wägung des zweiten Drehgestells 4.2 am Ende des dritten Waggons 4 im Zuge der dritten Einzelwägung (untere Darstellung).

Im ersten Wägedurchgang wird die Kombination der in den Einzelwägungen einzeln oder zusammen verwogenen Drehgestelle demnach gebildet von dem ersten Drehgestell 2.1 des ersten Waggons 2 (erste Einzelwägung), von den beiden benachbarten Jakobs-Drehgestellen 2.2 und 3.4 zwischen den Waggons 2 und 3 bzw. zwischen den Waggons 3 und 4 (zweite Einzelwägung), und von dem zweiten Drehgestell 4.2 des dritten Waggons 4 (dritte Einzelwägung).

Durch Summieren der Wägeergebnisse der drei Einzelwägungen erhält man das auf den ersten Wägedurchgang bezogene erste spezifische Referenzgewicht.

Im zweiten Wägedurchgang gemäß Fig. 3b werden bei der ersten Einzelwägung (obere Darstellung) das erste Drehgestell 2.1 des ersten Waggons 2 und das gemeinsame Jakobs-Drehgestell 2.3 der beiden Waggons 2 und 3 gemeinsam auf der Waage 6 verwogen und bei der zweiten Einzelwägung das gemeinsame Jakobs-Drehgestell 3.4 der beiden Waggons 3 und 4 sowie das zweite Drehgestell 4.2 des dritten Waggons 4.

Für den zweiten Wägedurchgang besteht die Kombination der in den Einzelwägungen einzeln oder zusammen verwogenen Drehgestelle aus dem ersten Drehgestell 2.1 des ersten Waggons 2 zusammen mit dem gemeinsamen Drehgestell 2.3 der beiden Waggons 2 und 3 (erste Einzelwägung) und aus dem gemeinsamen Drehgestell 3.4 der beiden Waggons 3 und 4 zusammen mit dem zweiten Drehgestell 4.2 des dritten Waggons 4 (zweite Einzelwägung).

Die zwei Wägeergebnisse der beiden Einzelwägungen ergeben in der Summe das auf den zweiten Wägedurchgang bezogene zweite spezifische Referenzgewicht.

Auch für das dritte Ausführungsbeispiel ist es charakteristisch, dass sich alle für die jeweiligen Wägedurchgänge ausgewählten Kombinationen der bei den Einzelwägungen einzeln oder zusammen zu verwiegenden Drehgestellen voneinander unterscheiden.

Bei allen Ausführungsbeispielen können die einzelnen spezifischen Referenzgewichte einer Plausibilitätskontrolle unterzogen werden. Unterscheiden sich die beiden spezifischen Referenzgewichte beispielsweise um weniger als ein von den Anforderungen an die Genauigkeit der Referenzgewichte abhängigen Grenzwert oder liegen die spezifischen Referenzgewichte innerhalb eines vorgegebenen Streubereichs, so sind die spezifischen Referenzgewichte plausibel und folglich für die erfindungsgemäße Ermittlung des Referenzgewichts geeignet. Insbesondere wird ein aus plausiblen spezifischen Referenzgewichten gebildeter Mittelwert, der dem erfindungsgemäßen Referenzgewicht entspricht, innerhalb der für das Referenzgewicht zulässigen Toleranzen liegen.

### Bezugszeichenliste:

- 1: Gleis
- 2: Erster Waggon
- 2.1: Erstes Drehgestell
- 2.2: Zweites Drehgestell
- 2.3: Erstes Jakobs-Drehgestell
- 3: Zweiter Waggon
- 3.1: Erstes Drehgestell
- 3.2: Zweites Drehgestell
- 3.4: Zweites Jakobs-Drehgestell
- 4: Dritter Waggon
- 4.2: Zweites Drehgestell
- 5: Schienenfahrzeug
- 6: Waage
- 7: EDV-Einheit

## Patentansprüche

1. Verfahren zur Ermittlung eines Referenzgewichts zur Kalibrierung bzw. Eichung von Fahrzeugwaagen, insbesondere für schienengebundene Fahrzeuge (5), mittels einer Waage (6), wobei als Referenzgewicht das Gesamtgewicht eines Fahrzeugs (5) mit mehreren Achsen bzw. mehreren Drehgestellen (2.1, 2.2, 3.1, 3.2, 2.3, 3.4, 4.2) dient, und das Referenzgewicht auf Basis einer Anzahl von Einzelwägungen ermittelt wird, wobei bei jeder Einzelwägung eine Achse bzw. ein Drehgestell (2.1, 2.2, 3.1, 3.2, 2.3, 3.4, 4.2) oder zusammen zwei oder mehr Achsen bzw. zwei oder mehr Drehgestelle (2.1, 2.2, 3.1, 3.2, 2.3, 3.4, 4.2) verwogen werden, und das Referenzgewicht durch Summenbildung der Wägeergebnisse der Einzelwägungen gebildet wird, wobei
- die Anzahl von Einzelwägungen in mehreren Wägedurchgängen durchgeführt werden, wobei
- in einem ersten Wägedurchgang die Einzelwägungen bei einer ersten vorbestimmten Kombination aus einzeln oder zusammen zu verwiegender Achsen bzw. Drehgestellen (2.1, 2.2, 3.1, 3.2, 2.3, 3.4, 4.2) durchgeführt werden und ein erstes spezifisches Referenzgewicht ermittelt wird, und **dadurch gekennzeichnet dass**,
- in mindestens einem weiteren Wägedurchgang die Einzelwägungen bei mindestens einer weiteren vorbestimmten Kombination aus einzeln oder zusammen zu verwiegender Achsen bzw. Drehgestellen (2.1, 2.2, 3.1, 3.2, 2.3, 3.4, 4.2) durchgeführt werden und mindestens ein weiteres spezifisches Referenzgewicht ermittelt wird, wobei
- sich die Kombinationen der einzeln oder zusammen zu verwiegenden Achsen bzw. Drehgestelle (2.1, 2.2, 3.1, 3.2, 2.3, 3.4, 4.2) der einzelnen Wägedurchgänge voneinander unterscheiden.

2. Verfahren nach Anspruch 1, **dadurch gekennzeichnet, dass** das Referenzgewicht aus dem Mittelwert der in den einzelnen Wägedurchgängen ermittelten spezifischen Referenzgewichte gebildet wird.

3. Verfahren nach Anspruch 1 oder 2, **dadurch gekennzeichnet, dass** das Referenzgewicht gültig ist, wenn sich die spezifischen Referenzgewichte zweier oder mehrerer unterschiedlicher Wägedurchgänge um weniger als eine von der erforderlichen Genauigkeit des Referenzgewichts abhängigen Toleranz unterscheiden, vorzugsweise um maximal 0,1 % .

4. Verfahren nach Anspruch 2 oder 3, **dadurch gekennzeichnet, dass** nur solche spezifische Referenzgewichte berücksichtigt werden, deren Abweichung vom Mittelwert weniger als eine von der erforderlichen Genauigkeit des Referenzgewichts abhängigen Toleranz beträgt, vorzugsweise maximal 0,1 %.

5. Verfahren nach einem der Ansprüche 1 bis 4, **dadurch gekennzeichnet, dass** zur Ermittlung des Referenzgewichts eine statische Waage (6) verwendet wird, insbesondere eine Brücken- oder Plattformwaage.

6. Verfahren nach einem der Ansprüche 1 bis 4, **dadurch gekennzeichnet, dass** zur Ermittlung des Referenzgewichts eine dynamische Waage verwendet wird.

7. Verfahren nach einem der Ansprüche 1 bis 6, **dadurch gekennzeichnet, dass** zur Ermittlung des Referenzgewichts kurzgekuppelte Waggons (2, 3) oder Waggons mit Jacobs-Drehgestellen (2, 3, 4) verwendet werden.

8. Vorrichtung zur Durchführung eines Verfahrens nach einem der Ansprüche 1 bis 7, mit einer Waage (6) zur Erfassung der Achs- bzw. Drehgestellgewichte eines Fahrzeugs (5) und einer Datenverarbeitungseinheit (7), die dazu ausgebildet ist, unterschiedliche Kombinationen einzeln oder zusammen zu verwiegender Achsen bzw. benachbarter Drehgestelle (2.1, 2.2, 3.1, 3.2, 2.3, 3.4, 4.2) zu erstellen.

9. Vorrichtung nach Anspruch 8, **dadurch gekennzeichnet, dass** die Datenverarbeitungseinheit (7) dazu ausgebildet ist, für die unterschiedlichen Kombinationen aus zwei oder mehr einzeln oder zusammen zu verwiegender Achsen bzw. Drehgestellen (2.1, 2.2, 3.1, 3.2, 2.3, 3.4, 4.2) jeweils durch Summenbildung spezifische Referenzgewichte zu bestimmen.

10. Verwendung einer statischen Waage (6) oder dynamischen Waage zur Durchführung eines Verfahrens nach einem der Ansprüche 1 bis 7.

## Claims

1. A method for determining a reference weight for calibration of vehicle scales, in particular for rail-bound vehicles (5), by means of a scale (6), wherein the total weight of a vehicle (5) having a plurality of axles or a plurality of bogies (2.1, 2.2, 3.1, 3.2, 2.3, 3.4, 4.2) serves as the reference weight, and the reference weight is determined on the basis of a number of individual weighings, wherein in each individual weighing one axle or one bogie (2.1, 2.2, 3.1, 3.2, 2.3, 3.4, 4.2) or together two or more axles or two or more bogies (2.1, 2.2, 3.1, 3.2, 2.3, 3.4, 4.2) are weighed, and the reference weight is formed by summing the weighing results of the individual weighings, wherein
- the number of individual weighings is performed in multiple weighing passes, wherein
- in a first weighing pass, the individual weighings are carried out in a first predetermined combination of axles or bogies (2.1, 2.2, 3.1, 3.2, 2.3, 3.4, 4.2) to be weighed individually or together, and a first specific reference weight is determined, and **characterized in that**
- in at least one further weighing pass, the individual weighings are carried out in at least one further predetermined combination of axles or bogies (2.1, 2.2, 3.1, 3.2, 2.3, 3.4, 4.2) to be weighed individually or together, and at least one further specific reference weight is determined, wherein
- the combinations of axles or bogies (2.1, 2.2, 3.1, 3.2, 2.3, 3.4, 4.2), to be weighed individually or together, of the individual weighing passes differ from one another.

2. The method according to claim 1, **characterized in that** the reference weight is formed from the mean value of the specific reference weights determined in the individual weighing passes.

3. The method according to claim 1 or 2, **characterized in that** the reference weight is valid if the specific reference weights of two or more different weighing passes differ by less than a tolerance dependent on the required accuracy of the reference weight, preferably by a maximum of 0.1%.

4. The method according to claim 2 or 3, **characterized in that** only such specific reference weights are taken into account whose deviation from the mean value is less than a tolerance dependent on the required accuracy of the reference weight, preferably a maximum of 0.1%.

5. The method according to one of claims 1 to 4, **characterized in that** a static scale (6) is used to determine the reference weight, in particular a weighbridge or platform scale.

6. The method according to one of claims 1 to 4, **characterized in that** a dynamic scale is used to determine the reference weight.

7. The method according to one of claims 1 to 6, **characterized in that** close-coupled wagons (2, 3) or wagons with Jacobs bogies (2, 3, 4) are used to determine the reference weight.

8. A device for carrying out a method according to one of claims 1 to 7, having a scale (6) for detecting the axle or bogie weights of a vehicle (5) and a data processing unit (7) which is designed to produce different combinations of axles or adjacent bogies (2.1, 2.2, 3.1, 3.2, 2.3, 3.4, 4.2) to be weighed individually or together.

9. The device according to claim 8, **characterized in that** the data processing unit (7) is designed to determine specific reference weights by summation for the different combinations of two or more axles or bogies (2.1, 2.2, 3.1, 3.2, 2.3, 3.4, 4.2) to be weighed individually or together.

10. Use of a static scale (6) or dynamic scale for carrying out a method according to one of claims 1 to 7.

## Revendications

1. Procédé pour la détermination d'un poids de référence pour le calibrage ou l'étalonnage de ponts-bascules, plus particulièrement pour des véhicules ferroviaires (5), au moyen d'une bascule (6), dans lequel, en tant que poids de référence, le poids total d'un véhicule (5) avec plusieurs essieux ou plusieurs bogies (2.1, 2.2, 3.1, 3.2, 2.3, 3.4, 4.2) est utilisé et le poids de référence est déterminé sur la base d'un nombre de pesages individuels, dans lequel, à chaque pesage individuel, un essieu ou un bogie (2.1, 2.2, 3.1, 3.2, 2.3, 3.4, 4.2) est pesé ou deux essieux ou plus ou deux bogies (2.1, 2.2, 3.1, 3.2, 2.3, 3.4, 4.2) sont pesés et le poids de référence est constitué de la somme des résultats de pesage des pesages individuels, dans lequel
- le nombre de pesages individuels est effectué en plusieurs passages de pesage, dans lequel
- dans un premier passage de pesage, les pesages individuels sont effectués dans une première combinaison prédéterminée, constituée d'essieux ou de bogies (2.1, 2.2, 3.1, 3.2, 2.3, 3.4, 4.2) à peser individuellement ou ensemble et un premier poids de référence spécifique est déterminé et **caractérisé en ce que**
- dans au moins un autre passage de pesage, les pesages individuels sont effectués dans au moins une autre combinaison prédéterminée, constituée d'essieux ou de bogies (2.1, 2.2, 3.1, 3.2, 2.3, 3.4, 4.2) à peser individuellement ou ensemble et au moins un autre poids de référence spécifique est déterminé, dans lequel
- les combinaisons d'essieux ou de bogies (2.1, 2.2, 3.1, 3.2, 2.3, 3.4, 4.2) à peser individuellement ou ensemble des différents passages de pesage sont différentes les uns des autres.

2. Procédé selon la revendication 1, **caractérisé en ce que** le poids de référence est formé à partir de la valeur moyenne des poids de référence spécifiques déterminés dans les différents passages de pesage.

3. Procédé selon la revendication 1 ou 2, **caractérisé en ce que** le poids de référence est valide lorsque les poids de référence spécifiques de deux passages de pesage différents ou plus divergent de moins d'une tolérance dépendant de la précision nécessaire du poids de référence, de préférence de 0,1 % maximum.

4. Procédé selon la revendication 2 ou 3, **caractérisé en ce que** seuls les poids de référence spécifiques dont l'écart par rapport à la valeur moyenne est inférieur à une tolérance dépendant de la précision nécessaire du poids de référence, de préférence de 0,1 % maximum, sont pris en compte.

5. Procédé selon l'une des revendications 1 à 4, **caractérisé en ce que**, pour la détermination du poids de référence, une bascule statique (6) est utilisée, plus particulièrement une bascule à pont ou à plate-forme.

6. Procédé selon l'une des revendications 1 à 4, **caractérisé en ce que**, pour la détermination du poids de référence, une bascule dynamique est utilisée.

7. Procédé selon l'une des revendications 1 à 6, **caractérisé en ce que**, pour la détermination du poids de référence, des wagons à attelage court (2, 3) ou des wagons avec bogies de Jacobs (2, 3, 4) sont utilisés.

8. Dispositif pour l'exécution d'un procédé selon l'une des revendications 1 à 7, avec une bascule (6) pour la mesure du poids d'essieu ou de bogie d'un véhicule (5) et une unité de traitement de données (7) qui est conçue pour créer différentes combinaisons d'essieux ou de bogies (2.1, 2.2, 3.1, 3.2, 2.3, 3.4, 4.2) adjacents à peser individuellement ou ensemble.

9. Dispositif selon la revendication 8, **caractérisé en ce que** l'unité de traitement de données (7) est conçue pour déterminer, pour les différentes combinaisons de deux essieux ou bogies (2.1, 2.2, 3.1, 3.2, 2.3, 3.4, 4.2) ou plus, à peser individuellement ou ensemble, les poids de référence spécifiques par la formation d'une somme.

10. Utilisation d'une bascule statique (6) ou d'une bascule dynamique pour l'exécution d'un procédé selon l'une des revendications 1 à 7.
